# EUROPEAN PATENT SPECIFICATION

(11) **EP 0 548 154 B1**
(45) Date of publication and mention of the grant of the patent: **04.01.1995**
(21) Application number: 91916080.4
(22) Date of filing: 10.09.1991
(51) Int. Cl.: C03B 3/00, C03B 37/10

(54) **METHOD AND FURNACE FOR PREPARING A MELT FOR MINERAL FIBRE PRODUCTION**
VERFAHREN UND OFEN ZUR VORBEREITUNG EINER SCHMELZE FÜR MINERALFASERHERSTELLUNG
PROCEDE ET FOURNEAU SERVANT A PRODUIRE UN BAIN DE FUSION POUR LA FABRICATION DE FIBRES MINERALES

(30) Priority: 11.09.1990 DK 2171/90
(43) Date of publication of application: 30.06.1993
(73) Proprietor: Rockwool International A/S, 2640 Hedehusene (DK)
(72) Inventor: MOELLER, Jensen Leif, DK-4000 Roskilde (DK)
(74) Representative: Kyed, Iver
(86) International application number: DK9100259
(87) International publication number: WO9204286

(56) References cited:
- US-A- 4 381 934
- US-A- 4 422 862
- US-A- 4 432 780

## Description

The invention relates to a method of preparing a melt for mineral fibre production comprising introducing a starting material in the form of solid minerals at the upper end of a shaft furnace, which shaft furnace at its lower end has at least one extension in the lateral direction to form a column of material forming an inclined surface in the extended part of the shaft furnace, and heating the starting material to melt it by one or more burners from which a hot gas stream is emitted towards the inclined surface, and discharging the melt from the bottom of the shaft furnace.

US patent No. 4,422,862 discloses a process for using scrap glass with organic material thereon comprising the steps of feeding unmelted glass material to a glass melting vessel furnace to form a blanket of the material on the surface of molten glass in the furnace and feeding the scrap glass on top of the blanket so as to allow the organic material to be burned off before the scrap glass starts to melt.

US patent No. 4,381,934 discloses a method of liquefying glass material in a vessel containing a stable layer of glass material comprising the steps of feeding glass material into the vessel so as to form a transient layer of glass material on the stable layer, providing heat to the vessel to melt the transient layer, the melt thus formed running off the stable layer, and replenishing the transient glass layer by feeding additional glass material onto the stable layer so as to maintain the stable layer at a substantially constant volume.

In the production of mineral fibre products considerable amounts of waste materials are formed. Such waste materials may e.g. consist of cut off parts (edge cuts) of mineral fibre sheets, discarded mineral fibre sheets or parts of such sheets. Such waste materials ordinarily contain binder, but apart from the binder they have a composition desired for the melt production.

Up to now mineral fibre waste material has been disposed of by deposition on deposit sites suitable for such purposes. However, it has gradually become a serious problem to find suitable deposit sites which is partly due to the fact that the amount of waste material is very large and partly that the waste material may contain non-cured binder which contains the toxic substance phenol.

Furthermore, the costs of deposition is heavily increasing.

Instead of disposing of such waste materials by depositing them on such suitable deposit sites it will, therefore, be desirable to convert them into a melt and use the melt thus formed for mineral fibre production.

Therefore, it has been attempted to introduce waste material into the shaft furnace in mixture with the ordinary starting materials but this has caused problems in the operation of the shaft furnace. The reason for this is that the waste material in mixture with ordinary starting materials for a shaft furnace adversely affects the desired flow of hot gases up through the shaft furnace.

Furthermore, in this method a complete decomposition of the binder is not achieved and instead the binder is pyrolized to form unacceptable emission products which consequently must be disposed of in a subsequent, highly cost-raising afterburning.

It is well known to comminute waste materials from mineral fibre production by introducing them into a hammer mill and by mixing the product thus grinded with a binder, e.g. in the form of clay, and to produce briquettes thereof and to use these briquettes in mixture with ordinary starting materials for feeding conventional shaft furnaces.

However, the use of such briquettes causes various nuisances. Thus, they increase the formation of a frothy melt, and the problem of avoiding undesired emission products originating from the binder is not solved.

Beyond this the production of briquette is expensive as the production involves a laborious and cost-raising process and as a costly separate briquetting plant is required for exercising the process.

The object of the invention is to utilize mineral fibre waste from mineral fibre production in the production of a mineral melt in a simple and effective manner.

According to the invention this object is obtained by a method of the type mentioned in the introductory part of claim 1, and which method is characterized in that mineral fibre waste material is introduced onto the inclined surface of the column of material.

The invention is based on the discovery that the introduction of the waste material onto the surface of the starting material does not adversely affect the passage of hot gases through the column of material and that the temperature on the inclined surface of the column of material is very high, viz. about 1,300°C, and thus considerably higher than the 800°C which is required to decompose the binder completely and to convert it into unharmful compounds, viz. primarily CO₂ and water vapour, so as to eliminate the need for particular afterburning means.

The reason why the introduced waste material does not adversely affect the passage of the hot gases through the column of material is that the waste material is quickly melted partly because it has a large surface (the surface area per unit of volume of the fibrous waste material is up to 20,000 times higher than the corresponding value of the starting material), partly because there is a high radiation intensity in the part of the furnace into which the waste is introduced, and partly because the temperature at that site is very high as mentioned above.

Furthermore, it has surprisingly been found that the melt from the waste converges in small streams of melt which cover only a small part of the inclined surface and, therefore, do not prevent the hot combustion gases from flowing through the inclined surface and up through the column of material in order thereby to generate the necessary heating of the starting material which is a prerequisite for causing the starting material to melt in the extended part of the shaft furnace.

Another advantage of the method of the invention is that the production of briquettes is avoided and, therefore, the waste material need not be grinded, which is required when the waste material is to be used for the production of briquettes.

As a result thereof the dust nuisances in connection with the pre-treatment of the waste material are eliminated or reduced.

A further advantage of the method of the invention is that according to it minimum dust emission in the flue gas is obtained due to the rapid smelting.

The best results are obtained by introducing the waste material onto the inclined surface at several sites, e.g. at the same level, at the same time.

The introduction may be effected in a number of different ways, e.g. by means of cell sluices, screw conveyors or pistons, or pneumatically.

Instead of using several means for introducing the waste material into the furnace, the introduction can also be effected at one site and means may be provided for dispersing the introduced material over the said inclined surface.

According to a preferred embodiment of the method of the invention the waste material is comminuted into pieces prior to the introduction into the furnace, the pieces having such a size that they have a length below 100 mm, preferably below 50 mm, in their greatest extension.

The comminution of the waste material used for introducing into the furnace may e.g. be effected in a hammer mill or in a reaming apparatus.

Furthermore the invention relates to a furnace for exercising the method described above.

The furnace according to the invention comprises a shaft which at its upper end is provided with means for introducing starting material and means for discharging flue gas and which has at least one extension in the lateral direction at its lower end, said extension being formed in such a manner that the starting material therein forms a column of material having an inclined surface and wherein one or more burners are located for emitting a hot gas stream towards the inclined surface and in which the furnace has means for discharging melt. This furnace is, according to the invention, characterized in that it further comprises means for introducing mineral fibre waste material onto the inclined surface of the column of material.

The melting of starting material, including waste material, is preferably effected by means of one or more gas and/or oil burners which are located in such a manner that the stream of hot combustion gases generated therein is directed substantially perpendicularly towards the said inclined surface, thereby mainly generating melting in proximity to the inclined surface.

In case the mineral fibre content contains binder and/or other organic substances the flow of hot combustion gases may contain a surplus of oxygen or oxygen may be supplied separately to ensure that the binder and other organic substances, if any, are completely converted into unharmful products. The binder typically constitutes about 2% by weight of the waste material.

A preferred embodiment of the furnace according to the invention comprises a melt collecting chamber connected with the extended part of the furnace, and this chamber is preferably provided with means, e.g. in the form of gas and/or oil burners, for conditioning the melt.

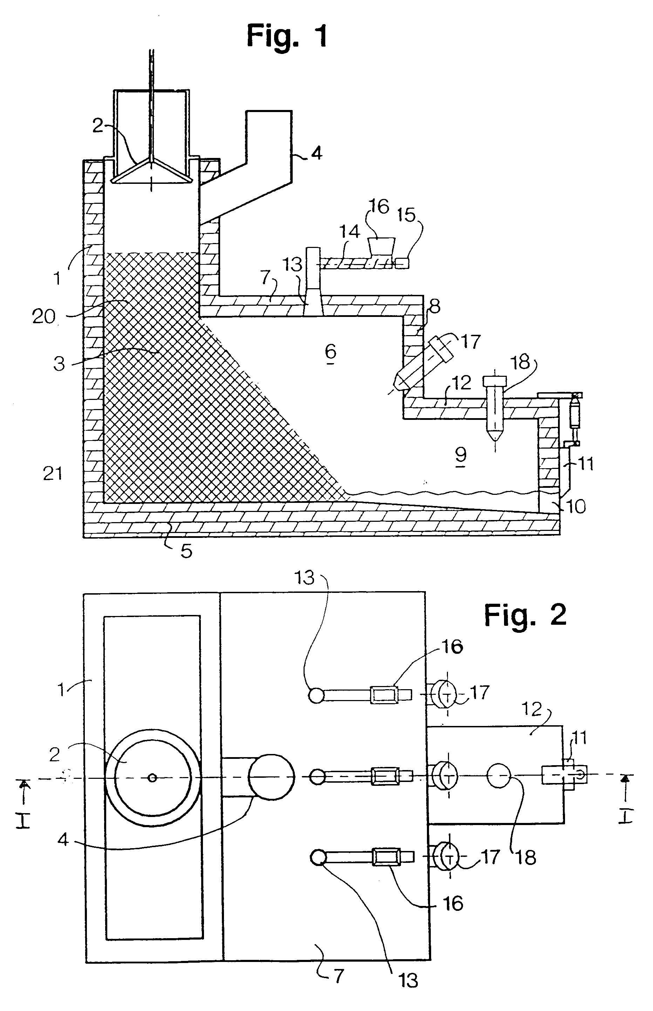

In the following the invention will be described in further detail with reference to the drawing showing a preferred embodiment of a furnace according to the invention as
- Fig. 1: shows a vertical cross-sectional view along the line I-I through the furnace according to Fig. 2 and
- Fig. 2: shows the furnace according to Fig. 1 as seen from above.

The furnace shown in the drawing comprises a shaft 1 having dosing means 2 for introducing starting material 3 into the upper part of the shaft 1. A discharge passage 4 for flue gas is furthermore provided in the shaft 1.

Moreover the furnace comprises a furnace bottom 5 extending from the shaft 1 to form a furnace chamber 6 which is delimited by a top wall 7 and an end wall 8. The furnace further comprises a melt collecting chamber 9 connected to the melt chamber 6, said melt collecting chamber 9 being provided with a melt discharge 10 having a pneumatically controlled discharge valve 11 and a top wall 12.

Three supply ducts 13 are formed in the top wall 7, each duct being connected to a dosing apparatus in the form of a screw conveyor 14 having a motor 15 and a supply funnel 16.

The furnace further comprises three gas burners 17 which are mounted obliquely in the end wall 8 and an additional gas burner 18 which is mounted vertically in the top wall 12.

The mode of operation of the described furnace is as follows:

The starting material is introduced into the shaft 1 by means of the dosing means 2 thereby resulting in the formation of a column of material 20 having an inclined surface 21 located in the melt chamber 6.

On combustion of gas in the burners 17 streams of hot combustion gases are formed which upon contact with the inclined surface 21 heat the starting material 3 and waste material which has been introduced and distributed onto the inclined surface 21 by means of the screw conveyor 14 and the supply ducts 13 after introduction into the supply funnel 16.

Thus, melting of the materials is effected and the melt flows down towards the furnace bottom 5, then into the chamber 9 and proceeds to the melt discharge 10.

During the stay in the chamber 9 the melt is maintained heated by means of hot combustion gases formed in the burner 18. The melt is discharged from the chamber 9, which discharge is regulated by means of the discharge valve 11.

## Claims

1. A method of preparing a melt for mineral fibre production comprising introducing a starting material (3) in the form of solid minerals at the upper end of a shaft furnace (1), which shaft furnace at its lower end has at least one extension (6) in the lateral direction to form a column of material (20) forming an inclined surface in the extended part (6) of the shaft furnace, and heating the starting material to melt it by one or more burners (17) from which a hot gas stream is emitted towards the inclined surface, and discharging the melt from the bottom of the shaft furnace, **characterized** in that mineral fibre waste material is introduced onto the inclined surface of the column of material.

2. A method according to claim 1, **characterized** in that the waste material is introduced onto the inclined surface at several sites at the same time.

3. A method according to claim 1, **characterized** in that all the waste material is introduced into the extended part (6) of the shaft furnace (1) at one site and that the material introduced is dispersed over the inclined surface.

4. A method according to claim 1, **characterized** in that prior to the introduction into the furnace (1) the waste material is comminuted into pieces having such a size that the pieces have a length of below 100 mm in their greatest extension.

5. A method according to claim 1, **characterized** in that prior to the introduction into the furnace (1) the waste material is comminuted into pieces having such a size that the pieces have a length of below 50 mm in their greatest extension.

6. A furnace for preparing a melt for mineral fibre production, which furnace comprises a shaft (1) which at its upper end is provided with means (2) for introducing starting material (3) and means (4) for discharging flue gas and which has at least one extension (6) in the lateral direction at its lower end, said extension being formed in such a manner that the starting material therein forms a column (20) of material having an inclined surface and wherein one or more burners (17) are located for emitting a hot gas stream towards the inclined surface and in which the furnace has means (10,11) for discharging melt, **characterized** in that it further comprises means (13,14,15,16) for introducing mineral fibre waste material onto the inclined surface of the column of material.

7. A furnace according to claim 6, **characterized** in that the extended part (6) of the shaft furnace (1) is connected with a melt collecting chamber (9).

8. A furnace according to claim 7, **characterized** in that at least one burner (18) is located in the melt collecting chamber (9).

## Patentansprüche

1. Verfahren zur Vorbereitung einer Schmelze für die Herstellung von Mineralfasern, umfassend das Einbringen eines Ausgangsmaterials (3) in Form von festen Mineralien am oberen Ende eines Schachtofens (1), der an seinem unteren Ende mindestens eine Verlängerung (6) in seitlicher Richtung hat, um eine Materialsäule (20) zu bilden, die in dem verlängerten Teil (6) des Schachtofens eine geneigte Oberfläche hat, und das Erhitzen des Ausgangsmaterials, um es zu schmelzen, mit einem oder mehreren Brennern, von denen ein heißer Gasstrom gegen die geneigte Oberfläche ausgestoßen wird, und das Abführen der Schmelze vom Boden des Schachtofens, dadurch **gekennzeichnet**, daß Abfallprodukte aus Mineralfasern auf die geneigte Oberfläche der Materialsäule aufgebracht werden.

2. Verfahren nach Anspruch 1, dadurch **gekennzeichnet**, daß die Abfallprodukte gleichzeitig auf mehrere Stellen der geneigten Oberfläche aufgebracht werden.

3. Verfahren nach Anspruch 1, dadurch **gekennzeichnet**, daß alle Abfallprodukte an einer Stelle in den verlängerten Teil (6) des Schachtofens (1) eingebracht werden und daß das eingebrachte Material über die geneigte Oberfläche verteilt wird.

4. Verfahren nach Anpruch 1, dadurch **gekennzeichnet**, daß die Abfallprodukte vor dem Einbringen in den Schachtofen (1) in Teile zerlegt werden, die eine solche Größe haben, daß die Teile eine Länge von weniger als 100 mm in ihrer größten Erstreckung haben.

5. Verfahren nach Anpruch 1, dadurch **gekennzeichnet**, daß die Abfallprodukte vor dem Einbringen in den Schachtofen (1) in Teile zerlegt werden, die eine solche Größe haben, daß die Teile eine Länge von weniger als 50 mm in ihrer größten Erstreckung haben.

6. Ofen zur Vorbereitung einer Schmelze für die Herstellung von Mineralfasern, umfassend einen Schacht (1) dessen oberes Ende mit einer Einrichtung (2) zum Einbringen eines Ausgangsmaterials (3) und mit einer Einrichtung (4) zum Ausstoßen von Rauchgas versehen ist und der an seinem unteren Ende mindestens eine Verlängerung (6) in seitlicher Richtung hat, wobei diese Verlängerung derart ausgebildet ist, daß das Ausgangsmaterial darin eine Materialsäule (20) bildet, die eine geneigte Oberfläche hat, und wobei ein oder mehrere Brenner (17) angeordnet sind, um einen heißen Gasstrom gegen die geneigte Oberfläche auszustoßen und wobei der Ofen eine Einrichtung (10, 11) zur Abgabe der Schmelze hat, dadurch **gekennzeichnet**, daß er ferner eine Einrichtung (13, 14, 15, 16) umfaßt, um Abfallprodukte aus Mineralfasern auf die geneigte Oberfläche der Materialsäule aufzubringen.

7. Ofen nach Anspruch 6, dadurch **gekennzeichnet**, daß der verlängerte Teil (6) des Schachtofens (1) mit einer Schmelzesammelkammer (9) verbunden ist.

8. Ofen nach Anspruch 7, dadurch **gekennzeichnet**, daß mindestens ein Brenner (18) in der Schmelzesammelkammer (9) angeordnet st.

## Revendications

1. Un procédé de préparation d'un bain de fusion pour la production de fibres minérales, comportant l'introduction d'une matière de départ (3) sous la forme de matières minérales solides à la partie supérieure d'un four à cuve (1), ce four à cuve présentant, à son extrémité inférieure, un prolongement (6) dans la direction latérale pour former une colonne de matière (20) définissant une surface inclinée dans la partie de prolongement (6) du four à cuve, et le chauffage de la matière de départ pour fondre celle-ci à l'aide d'un ou plus d'un brûleur (17) à partir duquel un courant de gaz chauds est émis vers la surface inclinée, et l'évacuation du bain de fusion à partir du fond du four à cuve, caractérisé en ce qu'une matière de déchets en fibres minérales est introduite sur la surface inclinée de la colonne de matière.

2. Un procédé selon la revendication 1, caractérisé en ce que la matière de déchets est introduite sur la surface inclinée en plusieurs endroits en même temps.

3. Un procédé selon la revendication 1, caractérisé en ce que toute la matière de déchets est introduite dans la partie de prolongement (6) du four à cuve (1) en un seul endroit, et en ce que la matière introduite est dispersée sur la surface inclinée.

4. Un procédé selon la revendication 1, caractérisé en ce que, préalablement à l'introduction dans le four (1), la matière de déchets est réduite en morceaux présentant une taille telle que les morceaux ont une longueur inférieure à 100 mm dans leur plus grande dimension.

5. Un procédé selon la revendication 1, caractérisé en ce que, préalablement à l'introduction dans le four (1), la matière de déchets est réduite en morceaux présentant une taille telle que les morceaux ont une longueur inférieure à 50 mm dans leur plus grande dimension.

6. Un four de préparation d'un bain de fusion pour la production de fibres minérales, ce four comportant une colonne (1) qui, à son extrémité supérieure, est pourvue de moyens (2) pour introduire la matière de départ (3) et de moyens (4) pour évacuer les gaz de combustion et qui comporte au moins un prolongement (6) dans la direction latérale à son extrémité inférieure, ledit prolongement étant formé de telle manière que la matière de départ qui y est présente forme une colonne (20) de matière présentant une surface inclinée, et dans laquelle un ou plus d'un brûleur (17) est placé pour émettre un courant de gaz chauds vers la surface inclinée, le four comportant des moyens (10, 11) pour décharger le bain de fusion, caractérisé en ce qu'il comporte au surplus des moyens (13, 14, 15, 16) pour introduire une matière de déchets en fibres minérales sur la surface inclinée de la colonne de matière.

7. Un four selon la revendication 6, caractérisé en ce que la partie de prolongement (6) du four à cuve (1) est reliée à une chambre (9) de recueil du bain de fusion.

8. Un four selon la revendication 7, caractérisé en ce qu'au moins un brûleur (18) est situé dans la chambre (9) de recueil du bain de fusion.
